(19) Europäisches Patentamt
European Patent Office
Office européen des brevets

(11) **EP 4 354 555 A1**

(12) **EUROPEAN PATENT APPLICATION**

(43) Date of publication:
**17.04.2024 Bulletin 2024/16**

(21) Application number: **23202521.3**

(22) Date of filing: **09.10.2023**

(51) International Patent Classification (IPC):
***H01M 4/62*** *(2006.01)* ***H01M 4/04*** *(2006.01)*
***C08F 220/06*** *(2006.01)* ***C08F 222/38*** *(2006.01)*
***H01M 4/134*** *(2010.01)* ***H01M 4/1395*** *(2010.01)*
***H01M 4/38*** *(2006.01)* ***H01M 10/0525*** *(2010.01)*
*H01M 4/02* *(2006.01)*

(52) Cooperative Patent Classification (CPC):
**H01M 10/0525; C08F 220/06; C08F 222/38; H01M 4/0404; H01M 4/134; H01M 4/1395; H01M 4/386; H01M 4/622;** H01M 2004/027

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **11.10.2022 KR 20220129767**
**06.10.2023 KR 20230133602**

(71) Applicants:
- **SK Innovation Co., Ltd.**
  **Seoul 03188 (KR)**
- **SK On Co., Ltd.**
  **Seoul 03161 (KR)**

(72) Inventors:
- **SON, Jun Soo**
  **34124 Daejeon (KR)**
- **SEON, Min Kyung**
  **34124 Daejeon (KR)**
- **LEE, Dong Gun**
  **34124 Daejeon (KR)**
- **JUNG, Gkwang Ho**
  **34124 Daejeon (KR)**
- **SEO, Seung Deok**
  **34124 Daejeon (KR)**

(74) Representative: **Prüfer & Partner mbB**
**Patentanwälte · Rechtsanwälte**
**Sohnckestraße 12**
**81479 München (DE)**

# (54) BINDER FOR SECONDARY BATTERY, NEGATIVE ELECTRODE FOR SECONDARY BATTERY INCLUDING THE SAME, AND LITHIUM SECONDARY BATTERY INCLUDING THE SAME

(57) Provided is a binder for a secondary battery including a copolymer comprising specific repeating units, and when the binder for a secondary battery is applied to a negative electrode and a secondary battery, expansion of the negative electrode may be effectively suppressed. Furthermore, the binder for a secondary battery has improved adhesion to effectively suppress exfoliation and desorption of a negative electrode active material, thereby manufacturing a secondary battery having significantly improved charge/discharge cycle characteristics and battery performance by using the binder.

EP 4 354 555 A1

## Description

### TECHNICAL FIELD

The following disclosure relates to a binder for a secondary battery, in particular for a a negative electrode of a secondary battery, to a negative electrode including the same, and a secondary battery including the same.
More particularly, the following disclosure relates to a binder including a copolymer containing specific repeating units, a negative electrode for a secondary battery manufactured using the same, and a secondary battery including the same.

### BACKGROUND

As a secondary battery application range is expanded to electric vehicles and power storage, a demand for developing an electrode having high stability, long cycle life, high energy density, and high output properties is growing.
A lithium secondary battery may be a battery including a positive electrode including a positive electrode active material capable of inserting/desorbing lithium ions, a negative electrode including a negative electrode active material, a microporous separator between the positive electrode and the negative electrode, and a nonaqueous electrolyte.
Among them, as a negative electrode active material, a silicon-based active material is increasingly used due to a significantly increased charge and discharge capacity, but since the volume expands by a lithium ion during charging and discharging, the stability of the battery is greatly affected. For example, when a silicon-based material is used as the negative electrode active material, the volume may be increased up to 300% in some cases, and thus, there is a limitation to use it, which causes charge and discharge characteristics to be significantly lowered.
In order to solve the problem, a technology of a binder for a negative electrode active material is being developed. For example, in order to suppress a change in volume due to the charge and discharge of, in particular, a silicon-based negative electrode active material as described above, a technology of forming a negative electrode active material layer using a binder such as carboxymethyl cellulose (CMC) and styrene butadiene rubber (SBR) as the binder of the negative electrode active material has been developed. However, the binder for a negative electrode active material may partly solve the problem of excessive volume expansion, but there is still a need to suppress volume expansion, and also, there is still a problem in that due to its low adhesion, a negative electrode is desorbed as charge and discharge progress, thereby deteriorating battery characteristics.
Therefore, there is a need to develop a novel binder for a negative electrode active material, which suppresses a change in volume of an electrode occurring as charge and discharge progress, retains sufficient adhesive strength not to release or desorb an active material from the electrode, and, in turn, prevents deterioration of battery performance.
In addition, a novel binder for a secondary battery, which may promote battery cycle life characteristics and performance improvement by developing a binder having the characteristics, is demanded.

### SUMMARY

An embodiment of the present disclosure is directed to providing a binder for a secondary battery having improved adhesion.
Another embodiment of the present disclosure is directed to providing a negative electrode slurry composition for a secondary battery having excellent adhesion and a negative electrode for a secondary battery including the same by using the binder.
Still another embodiment of the present disclosure is directed to providing a negative electrode for a secondary battery in which desorption of a negative electrode active material and expansion of a negative electrode are effectively suppressed, and a secondary battery including the same which has significantly improved charge/discharge cycle characteristics and battery performance.
According to the present disclosure, a binder for a secondary battery includes: a copolymer containing repeating units of the following Chemical Formula 1, Chemical Formula 2, Chemical Formula 3, and Chemical Formula 4:

1]

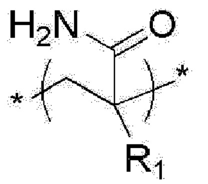

[Chemical Formula 2]

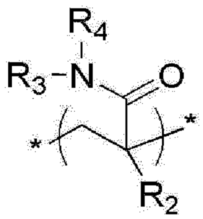

[Chemical Formula 3]

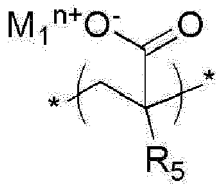

[Chemical Formula 4]

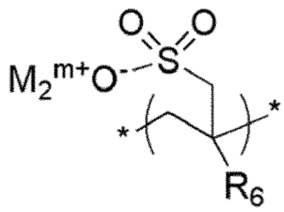

wherein

$R_1$ to $R_6$ are independently of one another hydrogen, or substituted or unsubstituted hydrocarbyl having 1 to 10 carbon atoms, and $R_3$ and $R_4$ are not hydrogen at the same time,
$M_1^{n+}$ is a cation having an oxidation number of n,
$M_2^{m+}$ is a cation having an oxidation number excluding a hydrogen ion of m, and
n and m are independently of each other an integer of 1 to 3.

In the binder for a secondary battery according to an exemplary embodiment, the copolymer may have a mole fraction of the repeating unit of Chemical Formula 1 of 0.2 to 0.8, a mole fraction of the repeating unit of Chemical Formula 2 of 0.1 to 0.7, a mole fraction of the repeating unit of Chemical Formula 3 of 0.05 to 0.5, and a mole fraction of the repeating unit of Chemical Formula 4 of 0.0001 to 0.01.

In the binder for a secondary battery according to an exemplary embodiment, the copolymer may have a ratio (b/a) of the mole fraction (b) of the repeating unit of Chemical formula 2 to the mole fraction (a) of the repeating unit of Chemical Formula 1 of 0.01 to 10, or 0.1 to 1.5.

In the binder for a secondary battery according to an exemplary embodiment, the copolymer may have a ratio (c/(a+b)) of the mole fraction (c) of the repeating unit of Chemical Formula 3 to the sum of the mole fraction (a) of the repeating unit of Chemical Formula 1 and the mole fraction (b) of the repeating unit of Chemical Formula 2 of 0.01 to 10.

In the binder for a secondary battery according to an exemplary embodiment, in Chemical Formula 2, the hydrocarbyl of $R_3$ and $R_4$ may be independently of each other branched or linear alkyl having 1 to 10 carbon atoms.

In the binder for a secondary battery according to an exemplary embodiment, $-CH_2-$of the alkyl may be replaced with one or more selected from -O-, -(C=O)O-, -C(=O)-, $-N(-R_7)-$, but is not limited thereto, in which $R_7$ may be branched or linear alkyl having 1 to 4 carbon atoms.

In the binder for a secondary battery according to an exemplary embodiment, in the repeating unit of Chemical Formula 3, $M_1^{n+}$ may be a hydrogen ion or an n-valent metal cation and may satisfy the following Equation 1:

$$\text{[Equation 1]}\ 0.1 \leq [M^+]/([H^+]+[M^+])$$

wherein

in the total moles of the repeating unit of Chemical Formula 3 contained in the copolymer, $[H^+]$ is moles of repeating units having a hydrogen ion, and $[M^+]$ is moles of repeating units having metal cations other than the hydrogen ion.

In the binder for a secondary battery according to an exemplary embodiment, the copolymer may have a weight average molecular weight of 500,000 to 2,000,000 Da.

In the binder for a secondary battery according to an exemplary embodiment, the binder for a secondary battery may be a binder for a negative electrode in a lithium secondary battery.

In another general aspect, a negative electrode slurry composition for a secondary battery includes: the binder for a secondary battery; and a negative electrode active material.

In the negative electrode slurry composition for a secondary battery according to an exemplary embodiment, the negative electrode active material may include a silicon-based active material.

In the negative electrode slurry composition for a secondary battery according to an exemplary embodiment, the negative electrode active material may further include a graphite-based active material.

In the negative electrode slurry composition for a secondary battery according to an exemplary embodiment, a mass ratio between the silicon-based active material and the graphite-based active material may be 3 to 97 : 97 to 3.

In still another general aspect, a negative electrode includes: a current collector; and a negative electrode active material layer disposed on the current collector, wherein the negative electrode active material layer comprises any of the binder(s) for a secondary battery described above.

In the negative electrode according to an exemplary embodiment, the binder for a secondary battery may be included at 0.5 to 30 wt% with respect to a weight of the negative electrode active material layer.

In still another general aspect, a secondary battery includes any of the negative electrode described above.

Other features and aspects will be apparent from the following detailed description, the drawings, and the claims.

## DETAILED DESCRIPTION OF EMBODIMENTS

Hereinafter, the present disclosure will be described in more detail. However, the following examples or exemplary embodiments are only a reference for describing the present disclosure in detail, and the present disclosure is not limited thereto and may be implemented in various forms.

In addition, unless otherwise defined, all technical terms and scientific terms have the same meanings as those commonly understood by one of those skilled in the art to which the present disclosure pertains.

The terms used for description in the present specification are only for effectively describing a certain specific exemplary embodiment, and are not intended to limit the present disclosure.

In addition, the singular form used in the specification and claims appended thereto may be intended to also include a plural form, unless otherwise indicated in the context.

In addition, units used in the present specification without particular mention are based on weights, and as an example, a unit of % or ratio refers to a wt% or a weight ratio and wt% refers to wt% of any one component in a total composition, unless otherwise defined.

In addition, unless explicitly described to the contrary, a part "comprising" a constituent element will be understood to imply further inclusion of other constituent elements rather than the exclusion of any other constituent elements.

In addition, the numerical range used in the present specification may include all values within the range

including the lower limit and the upper limit, increments logically derived in a form and span in a defined range, all double limited values, and all possible combinations of the upper limit and the lower limit in the numerical range defined in different forms. Unless otherwise particularly defined in the present specification, values which may be outside a numerical range due to experimental error or rounding off of a value are also included in the defined numerical range.

The term "substituted" described in the present specification refers to a hydrogen atom of a substituted part (for example, alkyl) being replaced with a substituent. Regarding the substituent, unless otherwise stated, hydroxy, halogen, nitro, cyano, amino, secondary amine, carboxyl, carboxylate, $C_{1-7}$ alkyl, $C_{2-7}$ alkenyl, $C_{1-7}$ haloalkyl, $C_{1-7}$ alkoxy, $C_{1-7}$ alkoxycarbonyl, but is not limited thereto may be included as an optional substituent of the present invention.

"Hydrocarbon" described in the present specification refers to a chemical group containing only hydrogen and carbon atoms.

"Hydrocarbyl" described in the present specification refers to a radical having one bonding site derived from a hydrocarbon, and may include heterohydrocarbyl. "Heterohydrocarbyl" refers to a radical having one bonding site derived from a heterohydrocarbon, and "hetero-" means that carbon is substituted by one or more heteroatoms selected from B, O, N, C(=O), P, P(=O), S, $S(=O)_2$, a Si atom, but is not limited thereto.

"Substituted or unsubstituted hydrocarbyl having 1 to 10 carbon atoms" described in the present specification means that hydrocarbyl having 1 to 10 carbon atoms is unsubstituted or substituted by any substituent, and the substituent is as defined above.

"Alkyl" described in the present specification may include both linear (straight chain) or branched alkyl.

"Halogen" and "halo" described in the present specification refer to fluorine, chlorine, bromine, or iodine.

"Haloalkyl" described in the present specification refers to an alkyl group in which one or more hydrogen atoms are substituted by a halogen atom, respectively. For example, haloalkyl includes $-CF_3$, $-CHF_2$, $-CH_2F$, $-CBr_3$, $-CHBr_2$, $-CH_2Br$, $-CCl_3$, $-CHCl_2$, $-CH_2Cl$, $-CI_3$, - $CHI_2$, $-CH_2I$, $-CH_2-CF_3$, $-CH_2-CHF_2$, $-CH_2-CH_2F$, $-CH_2-CBr_3$, $-CH_2-CHBr_2$, $-CH_2-CH_2Br$, $-CH_2-CCl_3$, $-CH_2-CHCl_2$, $-CH_2-CH_2Cl$, $-CH_2-CI_3$, $-CH_2-CHI_2$, $-CH_2-CH_2I$, but is not limited thereto, wherein alkyl and halogen are as defined above.

"Alkenyl" described in the present specification refers to a saturated straight chain or branched acyclic hydrocarbon containing 2 to 30, or 2 to 20 carbon atoms and at least one carbon-carbon double bond. A representative straight chain or branched $C_{2-10}$ alkenyl includes -vinyl, - allyl, -1-butenyl, -2-butenyl, -isobutylenyl, -1-pentenyl, -2-pentenyl, -3-methyl-1-butenyl, -2-methyl-2-butenyl, -2,3-dimethyl-2-butenyl, -1-hexenyl, -2-hexenyl, -3-hexenyl, -1-heptenyl, -2-heptenyl, -3-heptenyl, -1-octenyl, -2-octenyl, -3-octenyl, -1-nonenyl, -2-nonenyl, -3-nonenyl, -1-decenyl, -2-decenyl, and -3-decenyl. The alkenyl group may be selectively substituted.

"Alkoxy" described in the present specification refers to -O-(alkyl) including $-OCH_3$, $-OCH_2CH_3$, $-O(CH_2)_2CH_3$, $-O(CH_2)_3CH_3$, $-O(CH_2)_4CH_3$, $-O(CH_2)_5CH_3$, but is not limited thereto, in which alkyl is as defined above.

In the present specification, "alkoxycarbonyl" refers to (alkoxy)-C(=O)-, in which alkoxy is as defined above. An example of the alkoxycarbonyl includes methoxycarbonyl, ethoxycarbonyl, isopropoxycarbonyl, propoxycarbonyl, butoxycarbonyl, isobutoxycarbonyl, t-butoxycarbonyl, but is not limited thereto.

"Hydroxy" described in the present specification refers to -OH, "nitro" refers to -NOz, "cyano" refers to -CN, "amino" refers to $-NH_2$, "secondary amine" refers to -NRH (wherein R is hydrocarbyl), "carboxyl" refers to -COOH, and "carboxylate" refers to -COOM. M may be an alkali metal or alkaline earth metal.

"Alkali metal" described in the present specification refers to lithium (Li), sodium (Na), potassium (K), rubidium (Rb), cesium (Cs), or francium (Fr), which is a chemical element other than hydrogen among Group 1 of the periodic table, and "alkaline earth metal" refers to beryllium (Be), magnesium (Mg), calcium (Ca), strontium (Sr), barium (Ba), or radium (Ra) which is a Group 2 element of the periodic table.

Hereinafter, the present disclosure will be described in more detail.

The present disclosure relates to a binder for a secondary battery including a copolymer for a binder for a secondary battery containing specific repeating units. A negative electrode manufactured by mixing the binder with a negative electrode active material and a secondary battery including the negative electrode have an excellent expansion resistance and an improved adhesive strength, thereby effectively suppressing the exfoliation or the desorption of the negative electrode active material and the expansion of the negative electrode even when a silicon-derived compound is used as a negative electrode active material, and providing a negative electrode for a secondary battery having improved charge/discharge cycle characteristics and battery performance, and a secondary battery including the same.

The present disclosure provides a binder for a secondary battery including: a copolymer containing repeating units of the following Chemical Formula 1, Chemical Formula 2, Chemical Formula 3, and Chemical Formula 4: The binder for a secondary battery shows an improved binding force, thereby effectively suppressing the exfoliation and desorption of the negative electrode active material and the expansion of the negative electrode, even when a silicon-derived compound is used as a negative electrode active material. Furthermore, a negative electrode for a secondary battery having improved charge/discharge cycle characteristics and battery performance, and a secondary battery including the same may be manufactured, using the binder for a secondary battery:

[Chemical Formula 1]

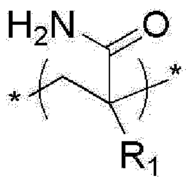

[Chemical Formula 2]

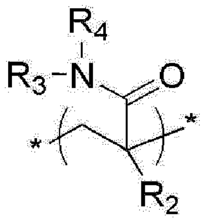

[Chemical Formula 3]

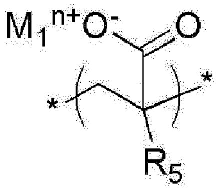

[Chemical Formula 4]

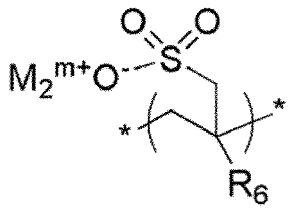

According to an exemplary embodiment, in Chemical Formula 1, $R_1$ may be hydrogen; or substituted or unsubstituted hydrocarbyl having 1 to 10 carbon atoms; or substituted or unsubstituted hydrocarbyl having 1 to 3 carbon atoms; or substituted or unsubstituted methyl.

According to an exemplary embodiment, the repeating unit of Chemical Formula 1 may be a repeating unit derived from acrylamide and a salt thereof.

According to an exemplary embodiment, in Chemical Formula 2, $R_2$ may be hydrogen; or substituted or unsubstituted hydrocarbyl having 1 to 10 carbon atoms; or substituted or unsubstituted hydrocarbyl having 1 to 3 carbon atoms; or substituted or unsubstituted methyl.

According to an exemplary embodiment, in Chemical Formula 2, $R_3$ and $R_4$ may be independently of each other hydrogen; or substituted or unsubstituted hydrocarbyl having 1 to 10 carbon atoms; substituted or unsubstituted hydrocarbyl having 1 to 7 carbon atoms; substituted or unsubstituted hydrocarbyl having 1 to 3 carbon atoms; or substituted or unsubstituted methyl, and $R_3$ and $R_4$ are not hydrogen at the same time. In addition, the hydrocarbyl of $R_3$ and $R_4$ may be further substituted by one or more selected from hydroxy, halogen, nitro, cyano, amino, secondary amine, carboxyl, carboxylate, $C_{1-7}$ haloalkyl, $C_{1-7}$ alkoxy, and $C_{1-7}$ alkoxycarbonyl, but is not limited thereto.

According to an exemplary embodiment, in Chemical Formula 2, the hydrocarbyl of $R_3$ and $R_4$ may be independently of each other hydrogen or branched or linear alkyl having 1 to 10 carbon atoms, or substituted or unsubstituted alkyl having 1 to 5 carbon atoms, or substituted or unsubstituted alkyl having 1 to 3 carbon atoms or substituted or unsubstituted alkyl having 1 to 3 carbon atoms; and $R_3$ and $R_4$ are not hydrogen at the same time. As an example, $R_3$

and $R_4$ may be independently of each other hydrogen, methyl, ethyl, propyl, n-butyl, n-pentyl, n-hexyl, n-heptyl, n-octyl, n-nonyl, n-decamethyl, i-propyl, i-butyl, s-butyl, t-butyl, ethylpentyl, ethylhexyl, dimethylpentyl, diethylpentyl, dimethylbutyl, diethylbutyl, diethylhexyl, trimethylbutyl, trimethylpentyl, trimethylhexyl, but are not limited thereto.

According to an exemplary embodiment, in $R_3$ and $R_4$ of Chemical Formula 2, the branched or linear alkyl may be further substituted by one or more substituent selected from hydroxy, halogen, nitro, cyano, amino, secondary amine, carboxyl, carboxylate, $C_{1-7}$ haloalkyl, $C_{1-7}$ alkoxy, and $C_{1-7}$ alkoxycarbonyl, but is not limited thereto.

According to an exemplary embodiment, $R_3$ and $R_4$ of Chemical Formula 2 may be hydrogen or branched or linear alkyl having 1 to 10 carbon atoms, $-CH_2-$ of the alkyl may be replaced with one or more selected from -O-, -(C=O)O-, -C(=O)-, $-N(-R_7)-$, but is not limited thereto, in which $R_7$ may be branched or linear alkyl having 1 to 4 carbon atoms. Specifically, - $CH_2$- of the alkyl of $R_3$ and $R_4$ may be replaced with -C(=O)-.

According to an exemplary embodiment, the repeating unit of Chemical Formula 2 may be used without a large limitation as long as the conditions of Chemical Formula 2 described above are satisfied, and a specific exemplary embodiment may be a repeating unit derived from any one selected from N-alkyl substituted (meth)acrylamide such as N-methyl(meth)acrylamide, N-ethyl(meth)acrylamide, N-propyl(meth)acrylamide, N-isopropyl(meth)acrylamide, N-butyl(meth)acrylamide, N-t-butyl(meth)acrylamide, N-pentyl(meth)acrylamide, N-hexyl(meth)acrylamide, N-heptyl(meth)acrylamide, N-octyl(meth)acrylamide, and N-tert-octyl(meth)acrylamide; N,N'-alkyl disubstituted (meth)acrylamide such as N,N'-dimethyl(meth)acrylamide, N,N'-diethyl(meth)acrylamide, N,N'-methylethyl(meth)acrylamide, N,N'-dibutyl(meth)acrylamide, and N,N'-di-t-butyl(meth)acrylamide; N-alkyl ketone substituted (meth)acrylamide such as diacetone (meth)acrylamide, but is not limited thereto. Herein, (meth)acrylamide may include acrylamide or methacrylamide. In a particularly preferred embodiment, the repeating unit of Chemical Formula 2 is a repeating unit derived from any one selected from N-isopropyl acrylamide, N-isopropyl methacrylamide, N,N'-diethyl acrylamide, N,N'-diethyl methacrylamide, diacetone acrylamide and diacetone methacrylamide.

In the binder for a secondary battery according to an exemplary embodiment, when a copolymer containing both the repeating units of Chemical Formula 1 and 2 is used as the binder for a secondary battery, a more improved binding force is shown, and thus, exfoliation and desorption of a negative electrode and expansion of a negative electrode may be effectively suppressed even when a silicon-based negative electrode active material is used. Furthermore, a secondary battery including a binder for a secondary battery having excellent physical properties may show excellent charge/discharge cycle characteristics and battery performance.

According to an exemplary embodiment, in Chemical Formula 3, $R_5$ may be hydrogen; or substituted or unsubstituted hydrocarbyl having 1 to 10 carbon atoms; or substituted or unsubstituted alkyl having 1 to 3 carbon atoms; or substituted or unsubstituted methyl. In Chemical Formula 3, $M_1^{n+}$ is a hydrogen ion or a cation having an oxidation number of n, and n is an integer of 1 to 3. Specifically, the cation having an oxidation number of n may be a metal cation, for example, an alkali metal ion when n is 1, or, at least one selected from a sodium ion, a potassium ion, a lithium ion, but is not limited thereto, and may be an ammonium ion ($NH_4^+$). In some non-limiting examples, when n is 2, it may be an alkaline earth metal ion, or, may be a calcium ion or a magnesium ion. When n is 3, it may be a metal ion such as Al or Ga ion, but is not limited thereto as long as it is a commonly used or known metal cation.

In the binder for a secondary battery according to an exemplary embodiment, in the repeating unit of Chemical Formula 3, $M_1^{n+}$ may be a hydrogen ion or an n-valent metal cation and may satisfy the following Equation 1:

$$\text{[Equation 1]}\ 0.1 \leq [M^+]/([H^+]+[M^+])$$

$$\text{[Equation 2]}\ 0.5 \leq [M^+]/([H^+]+[M^+]) \leq 1.0$$

wherein in the total moles of the repeating unit of Chemical Formula 3 contained in the copolymer, $[H^+]$ is moles of repeating units having a hydrogen ion, and $[M^+]$ is moles of repeating units having metal cations other than the hydrogen ion. Specifically, $[M^+]/([H^+]+[M^+])$ of the above formula may refer to a degree of neutralization of the copolymer.

The binder for a secondary battery including the copolymer according to an exemplary embodiment in which the copolymer satisfies Equation 1, and/or Equation 2 has better adhesion, and also, when a negative electrode slurry composition for a secondary battery including the binder is prepared, coating capability may be improved and adhesion may be further improved, thereby effectively suppressing exfoliation and desorption of the negative electrode active material from a current collector. When a negative electrode and a secondary battery are manufactured using the binder for a secondary battery having adhesion as such, the expansion of a negative electrode is effectively suppressed to improve the charge/discharge cycle characteristics and the performance of a secondary battery, but the present disclosure is not limited thereto as long as the purpose of the present disclosure is achieved.

According to an exemplary embodiment, an exemplary embodiment of the repeating unit of Chemical Formula

3 may be a repeating unit derived from (meth)acrylic acid or ionized (meth)acrylic acid. Herein, the (meth)acrylic acid may include an acrylic acid or a methacrylic acid.

According to an exemplary embodiment, in Chemical Formula 4, $R_6$ may be hydrogen; or substituted or unsubstituted hydrocarbyl having 1 to 10 carbon atoms; substituted or unsubstituted hydrocarbyl having 1 to 3 carbon atoms; or substituted or unsubstituted methyl. In Chemical Formula 4, $M_2^{m+}$ is a cation having an oxidation number of m other than a hydrogen ion, and m is an integer of 1 to 3. Specifically, the cation having an oxidation number of m may be a metal cation, and since the detailed description of the metal cation is as described above in Chemical Formula 2, it will be omitted.

According to an exemplary embodiment, an exemplary embodiment of the repeating unit of Chemical Formula 4 may be a repeating unit derived from an ionized methallyl sulfonic acid. In a particularly preferred embodiment, the repeating unit of Chemical Formula 4 is a repeating unit derived from sodium methallyl sulfonate.

In addition, the copolymer may be prepared by various known methods such as emulsion polymerization, suspension polymerization, solution polymerization, and bulk polymerization.

In addition, the copolymer may include known repeating units other than the repeating units of Chemical Formula 1 to 4 such as, for example, one or more of (meth)acrylamide monomer-derived unit, acrylonitrile monomer-derived unit, aromatic vinyl monomer-derived unit but is not limited thereto, within a range which does not impair the physical properties to be implemented by the present disclosure.

In the binder for a secondary battery according to an exemplary embodiment, the binder for a secondary battery including the copolymer containing repeating units of Chemical Formula 1 to 4 may improve a binding force between a negative electrode current collector and a negative electrode active material layer and/or inside of a negative electrode active material layer, thereby suppressing exfoliation and desorption of the negative electrode active material and improving adhesive strength to the current collector and flexibility of the negative electrode active material layer. In addition, even when a silicon-derived compound is contained in a negative electrode active material, expansion may be effectively suppressed to stabilize battery performance.

The binder for a secondary battery according to an exemplary embodiment may be a binder for a negative electrode in a lithium secondary battery or a binder for a positive electrode in a lithium secondary battery positive electrode, or, may be a binder for negative electrode in a lithium secondary battery.

In the binder for a secondary battery according to an exemplary embodiment, the copolymer may be a random copolymer, a block copolymer, or a tapered copolymer in which the repeating units of Chemical Formula 1 to 4 form a backbone, and the kind thereof is not limited. Specifically, it may be a random copolymer, and a random copolymer including the repeating units of Chemical Formula 1 to 4 may have excellent solubility in water to have improved processability and workability in the preparation of a negative electrode slurry composition for a secondary battery, and may have excellent flexibility to improve strength and flexibility of the negative electrode active material layer.

In the binder for a secondary battery according to an exemplary embodiment, the copolymer may be a linear polymer or a branched polymer.

According to an exemplary embodiment, when the copolymer is a linear polymer, considering that the copolymer has a larger radius of gyration in a solvent and, in particular, the copolymer contains both the repeating units of Chemical Formula 1 and 2 to have an appropriate free-volume, when the copolymer is used as a binder for a secondary battery, it may bind to a negative electrode active material very effectively to form a high-density negative electrode active material layer. In addition, a negative electrode for a secondary battery manufactured using this may suppress desorption of a negative electrode and minimize expansion of a negative electrode.

In the binder for a secondary battery according to an exemplary embodiment, the copolymer may have a weight average molecular weight of 200,000 to 2,000,000 Da, or 500,000 to 2,000,000 Da, or 700,000 to 1,300,000 Da. When the weight average molecular weight range is satisfied, the adhesive properties of the binder for a secondary battery may be improved, and exfoliation and desorption of the negative electrode and expansion of the negative electrode may be more effectively suppressed, whereby a secondary battery having excellent cycle life characteristics and battery performance may be manufactured.

In the binder for a secondary battery according to an exemplary embodiment, the copolymer may have a mole fraction of the repeating unit of Chemical Formula 1 of 0.05 to 0.9, a mole fraction of the repeating unit of Chemical Formula 2 of 0.05 to 0.85, a mole fraction of the repeating unit of Chemical Formula 3 of 0.01 to 0.7, and a mole fraction of the repeating unit of Chemical Formula 4 of 0.0001 to 0.05. Or, the copolymer may have the mole fraction of the repeating unit of Chemical Formula 1 of 0.2 to 0.8, the mole fraction of the repeating unit of Chemical Formula 2 of 0.1 to 0.7, the mole fraction of the repeating unit of Chemical Formula 3 of 0.05 to 0.5, and the mole fraction of the repeating unit of Chemical Formula 4 of 0.0001 to 0.01. Or, the copolymer may have the mole fraction of the repeating unit of Chemical Formula 1 of 0.35 to 0.75, the mole fraction of the repeating unit of Chemical Formula 2 of 0.1 to 0.4, the mole fraction of the repeating unit of Chemical Formula 3 of 0.05 to 0.4, and the mole fraction of the repeating unit of Chemical Formula 4 of 0.0005 to 0.005. More preferably, the copolymer may have the mole fraction of the repeating unit of Chemical Formula 1 of 0.4 to 0.7, the mole fraction of the repeating unit of Chemical Formula 2 of 0. 15 to 0.4, the mole fraction

of the repeating unit of Chemical Formula 3 of 0.05 to 0.4, and the mole fraction of the repeating unit of Chemical Formula 4 of 0.0005 to 0.005.

In the binder for a secondary battery according to an exemplary embodiment, the copolymer may have a ratio (b/a) of the mole fraction (b) of the repeating unit of Chemical Formula 2 to the mole fraction (a) of the repeating unit of Chemical Formula 1 of 0.01 to 10, or 0.1 to 3, or 0.15 to 1.5, or 0.15 to 1.0.

In the binder for a secondary battery according to an exemplary embodiment, the copolymer may have a ratio (c/a) of the mole fraction (c) of the repeating unit of Chemical Formula 3 to the mole fraction (a) of the repeating unit of Chemical Formula 1 of 0.01 to 10, or 0.1 to 3, or 0.2 to 0.8.

In the binder for a secondary battery according to an exemplary embodiment, the copolymer may have a ratio (c/b) of the mole fraction (c) of the repeating unit of Chemical Formula 3 to the mole fraction (b) of the repeating unit of Chemical Formula 2 of 0.01 to 10, or 0.1 to 5, or 0.4 to 3.0.

In the binder for a secondary battery according to an exemplary embodiment, the copolymer may have a ratio c/(a+b) of the mole fraction (c) of the repeating unit of Chemical Formula 3 to the sum of the mole fraction (a) of the repeating unit of Chemical Formula 1 and the mole fraction (b) of the repeating unit of Chemical Formula 2 of 0.01 to 10, or 0.1 to 3, or 0.15 to 1.0, or 0.15 to 0.5.

In the binder for a secondary battery according to an exemplary embodiment, the binder for a secondary battery may further comprise one or more solvent(s) such as water and/or organic solvents as discussed below(a binder composition) to form a composition, and a dry weight of the binder composition for a secondary battery may be 0.1 to 40 wt%, or 1 to 20 wt%, but the solvent may be used with appropriate adjustments depending on working conditions such as viscosity and coating capability.

The secondary battery manufactured by using the binder for a secondary battery suppresses the expansion of a negative electrode to show a lower expansion rate and an improved capacity retention rate, thereby effectively improving the charge/discharge cycle characteristics and the performance of the secondary battery.

The present disclosure may provide a negative electrode slurry composition for a secondary battery including: the binder for a secondary battery described above; and a negative electrode active material.

The negative electrode active material may be one or a combination of two or more selected from the group consisting of graphite-based active materials, platinum, palladium, silicon-based active materials, aluminum, bismuth, tin, zinc, silicon-carbon composite active materials, but is not limited thereto. For example, it may be more preferred to use a silicon-based active material or a negative electrode active material including a silicon-based active material since better effects are shown, but it is preferred in terms of suppressing expansion, and it is not limited in terms of excellence in a binding force or electrical properties. In a preferred exemplary embodiment, the negative electrode active material may further include a graphite-based active material in addition to the silicon-based active material, and a mass ratio between the silicon-based active material and the graphite-based active material may satisfy 1 to 99 : 99 to 1, 5 to 95 : 95 to 5, or 10 to 90 : 90 to 10, but is not limited thereto.

The silicon-based active material may have an average particle diameter of 0.1 to 50 μm, but is not limited thereto, and the silicon-based active material may include a silicon-based material, for example, Si, $SiO_x$ ($0<x<2$), a Si-Q alloy (Q is one or a combination of two or more selected from the group consisting of alkali metals, alkaline earth metals, Group 13 elements, Group 14 elements, Group 15 elements, Group 16 elements, transition metals, rare earth elements, but is not limited thereto, except Si and C), a silicon-carbon composite, but is not limited thereto. The silicon-carbon composite may include, for example, silicon carbide (SiC) or silicon-carbon particles having a core-shell structure, and as a non-limiting example, may be formed by depositing a silicon layer on a graphite core surface. As another example, the silicon-carbon particles may be formed by coating commercially available graphite particles with a silicon layer by a chemical vapor deposition (CVD) process using a silicon precursor compound such as a silane-based compound. In some exemplary embodiments, the particles may further include amorphous carbon coating, but are not limited thereto.

The graphite-based active material may be artificial graphite or a mixture of artificial graphite and natural graphite. The graphite-based active material may have an average particle diameter (D50, e.g. determined by laser diffraction according to ISO13320) of 5 to 30 μm, or 8 to 20 μm, and may be amorphous, plate-like, flaky, spherical, or fibrous, but is not limited thereto. Meanwhile, when the graphite-based active material is a mixture of artificial graphite and natural graphite, or, the content of the artificial graphite may be equivalent to or higher than the content of the natural graphite, and the artificial graphite and the natural graphite may be included at a weight ratio of 50 to 95 : 50 to 5, or 50 to 90 : 50 to 10, or 60 to 90 : 40 to 10. Thus, adhesive strength between a current collector and an active material layer may be further improved, and a high-rate charge capacity retention rate and cycle life characteristics of a battery may be improved.

The negative electrode slurry composition for a secondary battery according to an exemplary embodiment may further include a conductive material and a solvent.

The conductive material is used for imparting conductivity to an electrode, and may be used without significant limitation as long as it is an electronically conductive material without causing a chemical change in a battery, and as

the conductive material, one or a combination of two or more selected from the group consisting of graphite-based conductive materials, carbon black-based conductive materials, graphene, carbon nanotubes (CNT), metal-based and metal compound-based conductive materials, but is not limited thereto may be used. A non-limiting example of the carbon black-based conductive material includes acetylene black, ketjen black, denka black, thermal black, channel black, but is not limited thereto, the carbon nanotubes may have an average length of 1 to 20 μm, but is not limited thereto, a non-limiting example of the carbon nanotubes includes single-walled carbon nanotubes (SWCNT), double-walled carbon Nanotubes (DWCNT), multi-walled carbon nanotubes (MWCNT), rope carbon nanotubes, and a non-limiting example of the metal-based or metal compound-based conductive material includes tin, tin oxide, tin phosphate ($SnPO_4$), titanium oxide, potassium titanate, perovskite materials such as $LaSrCoO_3$ and $LaSrMnO_3$, but the present disclosure is not limited to the conductive materials listed above. The conductive material may be included at 0.05 to 30 wt% with respect to the total weight of the negative electrode active material layer, but the content of the conductive material may be appropriately adjusted depending on the purpose of use and the physical properties thereof.

The solvent is a solvent for forming a negative electrode slurry composition for a secondary battery, and may be an aqueous solvent such as water. The solvent may be used at a content to allow the composition to have appropriate viscosity, considering the applicability and coating capability of the negative electrode slurry composition for a secondary battery. Otherwise, an organic solvent or a mixed solvent of an organic solvent and water may be used as needed. When an organic solvent is used, a non-limiting example thereof may be one or more of alcohol, ether, ester, ketone, hydrocarbon, and is not limited thereto as long as the binder for a secondary battery described above is dissolved in the solvent.

A solid content (dry weight) of the negative electrode slurry composition for a secondary battery according to an exemplary embodiment may be 1 wt% or more, 5 wt% or more, 10 wt% or more, 20 wt% or more, 35 wt% or more, 40 wt% or more, 45 wt% or more, or 50 wt% or more and the upper limit thereof is not limited, but may be 60 wt% or less, 70 wt% or less, 80 wt% or less, 90 wt% or less, or 95 wt% or less, or any values or subrange within these ranges, but is not limited thereto.

A solid content (dry weight) of the negative electrode slurry composition for a secondary battery according to an exemplary embodiment may be 1 to 95 wt%, 5 to 95 wt%, 10 to 95 wt%, 20 to 80 wt%, 35 to 80 wt%, 40 to 70 wt%, 45 to 70 wt%, or 50 to 60 wt%, but is not limited thereto.

The present disclosure may provide a negative electrode for a secondary battery including: a current collector; and a negative electrode active material layer disposed on the current collector, wherein the negative electrode active material layer includes the binder for a secondary battery described above.

The current collector may be one or a combination of two or more selected from the group consisting of copper foil, nickel foil, stainless foil, titanium foil, nickel foam, copper foam, a polymer substrate coated with a conductive metal, but is not limited thereto, and materials known in the art may be used without limitation.

In the negative electrode for a secondary battery according to an exemplary embodiment, the binder for a secondary battery may be included at 0.5 to 30 wt%, or 0.5 to 20 wt%, or 1 to 10 wt% with respect to the total weight of the negative electrode active material layer, but the amount of the binder is not particularly limited as long as the performance of a secondary battery intended in the present disclosure is not impaired. When the content of the binder satisfies the range, the expansion of a negative electrode and the desorption of a negative electrode active material caused during charging and discharging may be effectively suppressed, thereby implementing further improved capacity and energy density of the secondary battery.

The negative electrode active material layer is subjected to a subsequent process such as drying of the negative electrode slurry composition for a secondary battery described above, thereby preparing a negative electrode active material layer including a binder for a secondary battery, a negative electrode active material, a conductive material, but is not limited thereto. Specifically, the negative electrode active material layer includes the binder for a secondary battery including the copolymer, thereby effectively suppressing the desorption of the negative electrode, the conductive material, but is not limited thereto, and the expansion of the negative electrode.

In addition, the negative electrode active material layer may have a thickness of 1 to 150 μm, or 10 to 100 μm, or 20 to 80 μm, but is not limited thereto. The thickness may be adjusted by coating an appropriate application amount depending on the solid content of the negative electrode slurry composition for a secondary battery described above, or, the coating amount may be 0.1 to 20 $mg/cm^2$, or 1 to 10 $mg/cm^2$, but is not limited thereto. Generally, the coating amount may be determined by calculating the weight of the applied coating layer per area. Specifically, the coating amount may be averagely obtained by cutting the negative electrode active material layer by 1 cm × 1 cm with a punching machine and subtracting the weight of the current collector from that of the negative electrode active material layer.

The present disclosure may provide a secondary battery including the negative electrode for a secondary battery described above. Specifically, a secondary battery including a negative electrode for a secondary battery including: a current collector; and a negative electrode active material layer disposed on the current collector, wherein the negative electrode active material layer includes any of the binder(s) for a secondary battery described above. Herein, since the detailed descriptions of the binder for a secondary battery, the negative electrode active material, the negative electrode active material layer, the current collector, and the negative electrode for a secondary battery are as the above, they

will be omitted.

The secondary battery may include the negative electrode for a secondary battery described above, a positive electrode, and an electrolyte, and may further include a separator interposed between the positive electrode and the negative electrode.

The positive electrode may include a current collector; and a positive electrode active material layer formed by applying a composition for a positive electrode including a positive electrode active material on the current collector. As the current collector, the negative electrode current collector described above may be used, and any material known in the art may be used, but is not limited thereto. In addition, the positive electrode active material layer may include a positive electrode active material, and optionally, may further include a binder for a positive electrode and a conductive material. The positive electrode active material may be any positive electrode active material known in the art, and may be, for example, a composite oxide of lithium with a metal selected from cobalt, manganese, nickel, and a combination thereof, but is not limited thereto. As the binder for a positive electrode and the conductive material, the negative electrode binder or the binder composition described above; and the negative electrode conductive material may be used, and any material known in the art may be used, but the present disclosure is not limited thereto.

The electrolyte may be an electrolyte solution including an organic solvent and a lithium salt. The organic solvent serves as a medium in which ions involved in the electrochemical reaction of a battery may move, and for example, may be carbonate-based, ester-based, ether-based, ketone-based, alcohol-based, or aprotic solvents, the organic solvent may be used alone or in combination of two or more, and a mixing ratio when used in combination of two or more may be appropriately adjusted depending on battery performance to be desired. In addition, organic solvents known in the art may be used, but the present disclosure is not limited thereto.

The lithium salt is dissolved in the organic solvent and may act as a source of the lithium ion in the battery to allow basic operation of a lithium secondary battery and to promote movement of lithium ions between a positive electrode and a negative electrode. A non-limiting example of the lithium salt may include $LiPF_6$, $LiBF_4$, $LiSbF_6$, $LiAsF_6$, $LiN(SO_3C_2F_5)_2$, $LiN(CF_3SO_2)_2$, $LiC_4F_9SO_3$, $LiClO_4$, $LiAlO_2$, $LiAlCl_4$, $LiN(C_xF_{2x+1}SO_2)(C_yF_{2y+1}SO_2)$ (x and y are natural numbers), LiCl, LiI, $LiB(C_2O_4)_2$, or a combination thereof, but is not limited thereto. The concentration of the lithium salt may be within a range of 0.1 M to 5.0 M, or 0.1 M to 2.0 M. When the concentration of the lithium salt satisfies the range, the electrolyte solution has appropriate conductivity and viscosity, and thus, may show excellent electrolyte solution performance and effectively improve lithium ion mobility.

In addition, the electrolyte solution may further include pyridine, triethylphosphate, triethanolamine, cyclic ether, ethylene diamine, n-glyme, hexaphosphate triamide, a nitrobenzene derivative, sulfur, a quinone imine dye, N-substituted oxazolidinone, N,N-substituted imidazolidine, ethylene glycol dialkyl ether, ammonium salt, pyrrole, 2-methoxyethanol, aluminum trichloride, but is not limited thereto, for improving charge and discharge characteristics, flame retardant characteristics, and the like, if needed. In some cases, a halogen-containing solvent such as carbon tetrachloride and ethylene trifluoride may be further included for imparting non-flammability, and fluoro-ethylene carbonate (FEC), propene sultone (PRS), fluoro-propylene carbonate (FPC), but is not limited thereto may be further included for improving conservation properties at a high temperature.

The separator is a separator in which micropores through which ions may pass are formed, and a non-limiting example thereof may be one or a combination of two or more selected from the group consisting of glass fiber, polyester, polyethylene, polypropylene, polytetrafluoroethylene, but is not limited thereto and may be in a non-woven fabric or woven fabric form. Specifically, a polyolefin-based polymer separator such as polyethylene and polypropylene may be mainly used in the lithium secondary battery, but the present disclosure is not limited thereto. In addition, a separator coated with a composition including a ceramic component or a polymer material may be used for securing thermal resistance or mechanical strength, the separator may be used in a monolayer or multi-layer structure, and a separator known in the art may be used, but is not limited thereto.

The secondary battery according to an exemplary embodiment may have an expansion rate of 75% or less, or 1% to 75%. Specifically, the expansion rate may be 60% or less, or 1% to 60%,or 50% or less, or 1% to 50%, 45% or less, or 1% to 45%, or 40% or less, or 1% to 40%, or 35% or less, or 1% to 35%, and though the lower limit is not particularly limited, the expansion rate may be 0.1% or more. The secondary battery according to an exemplary embodiment satisfies the expansion rate range, thereby effectively preventing the separation and the desorption of an active material with strong adhesive strength even with the volume change of an electrode occurring as charge and discharge progress, and improving the structural stability of an electrode to suppress an increase in resistance by volume expansion, and thus, significantly improved cycle life characteristics and battery performance may be implemented.

The capacity retention rate after 100 cycles of charging and discharging the secondary battery according to an exemplary embodiment may be 75% or more, or 75% to 100%. Specifically, the capacity retention rate may be 80% or more, or 80% to 100%, 90% or more, or 90% to 100%, or 95% or more, or 95% to 100%. The secondary battery according to an exemplary embodiment may maintain a high capacity retention rate after charging and discharging, and may suppress the expansion of the negative electrode, thereby effectively improving the charge/discharge cycle characteristics and the performance of a secondary battery.

The present disclosure may provide a method of preparing a binder for a secondary battery including: neutralizing a copolymer containing the repeating units of Chemical Formula 1, Chemical Formula 2, Chemical Formula 3, and Chemical Formula 4 (hereinafter, referred to as a first copolymer) to prepare a neutralized copolymer.

Since the detailed descriptions of Chemical Formula 1 to 4 are as described above, they will be omitted.

In the method of preparing a binder for a secondary battery according to an exemplary embodiment, the neutralization reaction may be used without limitation as long as it is a known or commonly used method, and specifically, may be performed by dissolving or dispersing the first copolymer in water with alcohol or alcohol and using an alkali catalyst, and the alcohol may be methanol, ethanol, propanol, tert-butanol, but is not limited thereto, but specifically, water may be used. The concentration of the first copolymer in water may satisfy a range of 1 to 50 wt%, or 5 to 35 wt%, but is not limited thereto, and the concentration may be appropriately adjusted depending on the viscosity. As the alkali catalyst, alkali catalysts such as alkali metal hydroxides, for example, sodium hydroxide, potassium hydroxide, lithium hydroxide, sodium methylate, sodium ethylate, potassium methylate, and lithium methylate; or alcoholates; may be used. A degree of neutralization of the neutralized copolymer may be adjusted depending on the amount of the catalyst added, and though a reaction temperature of the neutralization reaction is not particularly limited, it may be 10 to 80°C, or 20 to 70°C.

In the method of preparing a binder for a secondary battery according to an exemplary embodiment, the degree of neutralization may be calculated by $[M^+]/([H^+]+[M^+])$, and the calculated value of the degree of neutralization may satisfy Equation 1, or, may satisfy Equation 2 (wherein in the repeating unit of Chemical Formula 3, when $M_1^{n+}$ is a hydrogen ion or an n-valent metal cation, in the total moles of the repeating unit of Chemical Formula 3 comprised in the neutralized copolymer, $[H^+]$ is moles of repeating units having a hydrogen ion, and $[M^+]$ is moles of repeating units having metal cations other than the hydrogen ion.). When a negative electrode slurry composition for a secondary battery and a negative electrode for a secondary battery are prepared using the copolymer satisfying the range, a binding force between the negative electrode active material and the current collector is effectively improved to effectively suppress the expansion of a negative electrode, thereby improving the charge/discharge cycle characteristics and the performance of a secondary battery, but the numerical range of the degree of neutralization is not limited thereto as long as the purpose of the present disclosure is achieved.

According to an exemplary embodiment, the binder for a secondary battery prepared above (neutralized copolymer) may be in a state of a composition which is present with a solvent such as water. The binder composition for a secondary battery includes 1 to 20 wt% of the binder for a secondary battery, but is not limited thereto. The negative electrode active material may be added to the binder composition for a secondary battery including the neutralized copolymer; and a solvent such as water to prepare a negative electrode slurry composition for a secondary battery. In addition, after subsequent application and drying steps, the solvent may be removed to form a negative electrode active material layer in which a negative electrode active material is firmly bound between the binders for a secondary battery. Thus, a negative electrode for a secondary battery in which the desorption of the negative electrode active material and the expansion of the negative electrode are effectively suppressed is manufactured, and a secondary battery having excellent battery characteristics and significantly improved charge/discharge cycle characteristics may be manufactured by including the negative electrode.

In addition, a negative electrode for a secondary battery or a secondary battery may be manufactured by a commonly used or known method.

Hereinafter, the present disclosure will be described in more detail with reference to the examples and the comparative examples. However, the following examples and the comparative examples are only an example for describing the present disclosure in more detail, and do not limit the present disclosure in any way.

The physical properties of the following examples and comparative examples were measured by the following methods.

[Method of evaluating physical properties]

1. Weight average molecular weight [kDa]

The weight average molecular weight of the copolymers prepared in the examples and the comparative examples were measured using GPC (Malvern). Agilent PL Aquagel OH Mixed-M+MixedH was used as a GPC column, 0.05 M $NaNO_3$ in distilled water was used as a solvent, Polyethylene glycol(PEG)/Polyethylene oxide(PEO)was used as a standard material, and the analysis was performed under the conditions of room temperature and a flow rate of 1 ml/min.

2. Adhesion test [N/20 mm]

The adhesion of the negative electrodes manufactured in the examples and the comparative examples were measured using UTM(Universal testing machine). The surface of a negative electrode with an area of 2 cm × 10 cm

was adhered to a book tape by rolling twice, the measurement was performed under the conditions of an angle of 180° and a speed of 300 mm/min in a longitudinal direction, and the measured values at the peeled-off moments in the central section of 20 mm are listed in the following Table 2.

3. Evaluation of battery performance

A CR2016 coin type half cell was manufactured in the examples and the comparative examples and the electrochemical properties were evaluated.

1) Charge capacity [mAh/g] and discharge capacity [mAh/g] at cycle 1, and initial efficiency [%]

Secondary batteries manufactured in the examples and the comparative examples were charged and discharged at 0.1 C between 0.01 V and 1.5 V, a charge capacity at cycle 1 (mAh/g), a discharge capacity at cycle 1 (mAh/g), and initial efficiency (%) were measured, respectively, and the results are shown in the following Table 2.

2) Expansion rate (%)

The thickness ($t_1$) of the secondary battery negative electrodes manufactured in the examples and the comparative examples was measured, a secondary battery was manufactured with the electrode and charged to 0.01 V at 0.1 C-rate, and a half cell was disassembled to measure the thickness ($t_2$) of the negative electrode after charging. The expansion rate of the negative electrode was calculated by the following calculation formula, and the calculated expansion rate is shown in the following Table 2.

$$\text{[Calculation Formula] Expansion rate (\%)} = (t_2 - t_1)/(t_1 - \text{current collector thickness}) \times 100$$

wherein a current collector thickness is the thickness of a negative electrode current collector used in the manufacture of the secondary battery negative electrode.

3) Capacity retention rate [%] after charging and discharging of 100 cycles

The secondary batteries manufactured in the examples and the comparative examples were charged and discharged three times at 0.1 C between 0.01 V and 1.5 V, and 100 cycles of charging and discharging at 0.5 C between 0.01 V and 1.0 V were performed to evaluate the charge/discharge cycle characteristics of the batteries. During the charging, CV current conditions were 0.01 C CV cutoff. The charge/discharge cycle characteristics were measured as a capacity retention rate after charging and discharging, which is expressed as a ratio (%) of a discharge capacity after repeating 100 cycles of charge and discharge to an initial discharge capacity. The results are shown in the following Table 2.

[Example 1]

<Preparation of copolymer and binder composition>

95.2 g of water, 6.0 g of acrylamide, and 5.6 g of N-isopropylacrylamide were added to a round bottom flask under a nitrogen atmosphere, the inside of the reactor was heated to 50°C, an aqueous solution in which 1.8 g of acrylic acid and 0.03 g of sodium methallyl sulfonate were dissolved in 3.0 g of distilled water was added to a reactor, and then an aqueous solution in which 0.03 g of potassium persulfate was dissolved in 1.0 g of distilled water was added thereto. After stirring for 1 hour, an aqueous solution in which 1.8 g of acrylic acid and 0.03 g of sodium methallyl sulfonate were dissolved in 3.0 g of distilled water was added dropwise to the reactor for 1 hour again. Thereafter, stirring was further performed for 16 hours while the inside of the reactor was maintained at 50°C, and the polymerization reaction was completed, thereby obtaining a composition including an acrylamide/ N-isopropylacrylamide/ acrylic acid/ sodium methallyl sulfonate copolymer. The composition was dried to obtain a copolymer, and the weight average molecular weight of the copolymer measured according to the weight average molecular weight analysis of the method of evaluating physical properties was 890 kDa.

For a neutralization reaction, a solid content of the composition was adjusted to 13 wt%, and then 30 g of the composition (13 wt%) was added to a round bottom flask, and an aqueous solution in which 0.7 g of potassium hydroxide (KOH) was dissolved in 4.8 g of water was added dropwise for 1 hour with stirring. Subsequently, stirring was performed at room temperature for 4 hours and the neutralization reaction was completed. Finally, a binder composition for a

secondary battery including a copolymer in which a mole composition ratio of acrylamide/ N-isopropylacrylamide/ potassium acrylate/ sodium methallyl sulfonate copolymer was 45.8/27/27/0.2 was obtained. The composition ratio was confirmed by $^{13}C$-NMR.

<Manufacture of secondary battery negative electrode>

A negative electrode active material, a CNT-based conductive material, and the binder composition prepared above were added to water so that their weight ratio satisfied a weight ratio of 97.05:0.25:2.70 based on a dry weight, and were mixed, thereby preparing a negative electrode slurry composition for a secondary battery (solid content: 50 wt%). Specifically, the negative electrode active material was a mixture of 11 wt% of a silicon-based active material (SiC) having an average particle diameter of 6 μm and 89 wt% of graphite (artificial graphite having an average particle diameter (D50, determined by laser diffraction according to ISO13320) of 13 μm), the CNT-based conductive material was a SW-CNT-based conductive material having an average length of 5 μm, and the negative electrode slurry composition satisfying the weight ratio was sufficiently stirred at a speed of 45 rpm for 30 minutes or more using a planetary mixer and dispersed. The thus-prepared negative electrode slurry composition was applied to a negative electrode Cu current collector (thickness: 10 μm) in an application amount of 5.6 mg/cm$^2$, dried in a vacuum oven at 70°C for 10 hours, and rolled under the conditions of a temperature of 50°C and a pressure of 15 MPa, thereby manufacturing a negative electrode having a final thickness of 50 μm. The adhesion of the negative electrode was measured and is listed in the following Table 1.

<Manufacture of coin cell (secondary battery)>

A polyethylene separator (thickness: 20 μm) was interposed between the negative electrode manufactured above and a lithium metal (thickness: 1 mm), and 1 M $LiPF_6$ dissolved in a mixed solvent including ethylene carbonate (EC)/ fluoroethylene carbonate (FEC)/ ethylmethyl carbonate (EMC)/ diethyl carbonate (DEC) at a volume ratio of 20/10/20/50 was used as an electrolyte solution, thereby manufacturing a coin cell-type half battery (CR2016 coin half cell) according to a common manufacturing method. Battery performance was evaluated and is listed in the following Table 2.

[Example 2]

The process was performed in the same manner as in Example 1, except that lithium hydroxide (LiOH) was used instead of potassium hydroxide (KOH) in a neutralization reaction step, and an aqueous solution in which 0.3 g of lithium hydroxide was dissolved in 6.0 g of water was used. The mole composition ratio of the synthesized acrylamide/N-isopropylacrylamide/lithium acrylate/sodium methallyl sulfonate copolymer was 45.8/27/27/0.2. The measured physical properties are shown in the following Tables 1 and 2.

[Example 3]

108.8 g of water, 5.0 g of acrylamide, and 10.0 g ofN-isopropylacrylamide were added to a round bottom flask under a nitrogen atmosphere, the inside of the reactor was heated to 50°C, an aqueous solution in which 1.1 g of acrylic acid and 0.03 g of sodium methallyl sulfonate were dissolved in 3.0 g of distilled water was added to a reactor, and then an aqueous solution in which 0.03 g of potassium persulfate was dissolved in 1.0 g of distilled water was added thereto. After stirring for 1 hour, an aqueous solution in which 1.1 g of acrylic acid and 0.03 g of sodium methallyl sulfonate were dissolved in 3.0 g of distilled water was added dropwise to the reactor for 1 hour again. Thereafter, the same process as in Example 1 was performed to complete the polymerization reaction, and a composition including an acrylamide/ N-isopropylacrylamide/ acrylic acid/ sodium methallyl sulfonate copolymer was obtained. The composition was dried to obtain the copolymer, and the weight average molecular weight measured by the same method as in Example 1 was 937 kDa.

For a neutralization reaction, a solid content of the composition was adjusted to 13 wt%, and then 30 g of the composition (13 wt%) was added to a round bottom flask, and an aqueous solution in which 0.6 g of potassium hydroxide (KOH) was dissolved in 3.7g of water was added dropwise for 1 hour with stirring. Subsequently, stirring was performed at room temperature for 4 hours and the neutralization reaction was completed. Finally, a binder composition for a secondary battery including a copolymer in which a mole composition ratio of an acrylamide/ N-isopropylacrylamide/ potassium acrylate/ acrylic acid/ sodium methallyl sulfonate copolymer was 36.6/46.6/8.3/8.3/0.2 was obtained. The composition ratio was confirmed by $^{13}C$-NMR.

[Example 4]

The process was performed in the same manner as in Example 3, except that an aqueous solution in which 0.8 g of potassium hydroxide was dissolved in 5.5 g of water was used in a neutralization reaction step. The mole composition ratio of the synthesized acrylamide/ N-isopropylacrylamide/ potassium acrylate/ acrylic acid/ sodium methallyl sulfonate copolymer was 36.6/46.6/12.4/4.2/0.2. The measured physical properties are shown in the following Tables 1 and 2.

[Example 5]

91 g of water, 8.0 g of acrylamide, and 3.6 g of diethyl acrylamide were added to a round bottom flask under a nitrogen atmosphere, the inside of the reactor was heated to 50°C, an aqueous solution in which 2.0 g of acrylic acid and 0.05 g of sodium methallyl sulfonate were dissolved in 3.0 g of distilled water was added to a reactor, and then an aqueous solution in which 0.03 g of potassium persulfate was dissolved in 1.0 g of distilled water was added thereto. After stirring for 1 hour, an aqueous solution in which 2.0 g of acrylic acid and 0.05 g of sodium methallyl sulfonate were dissolved in 3.0 g of distilled water was added dropwise to the reactor for 1 hour again. Thereafter, the same process as in Example 1 was performed to complete the polymerization reaction, and a composition including an acrylamide/ diethyl acrylamide/ acrylic acid/ sodium methallyl sulfonate copolymer was obtained. The composition was dried to obtain the copolymer, and the weight average molecular weight measured by the same method as in Example 1 was 913 kDa.

A subsequent process was performed in the same manner as in Example 1, except that an aqueous solution in which 0.3 g of potassium hydroxide was dissolved in 1.4 g of water was used in a neutralization reaction step. The mole composition ratio of the synthesized acrylamide/ diethyl acrylamide/ potassium acrylate/ acrylic acid/ sodium methallyl sulfonate copolymer was 66.6/16.6/12.4/4.2/0.2. The measured physical properties are shown in the following Tables 1 and 2.

[Example 6]

95 g of water, 7.0 g of acrylamide, and 4.2 g of diacetone acrylamide were added to a round bottom flask under a nitrogen atmosphere, the inside of the reactor was heated to 50°C, an aqueous solution in which 3.0 g of acrylic acid and 0.05 g of sodium methallyl sulfonate were dissolved in 3.0 g of distilled water was added to a reactor, and then an aqueous solution in which 0.03 g of potassium persulfate was dissolved in 1.0 g of distilled water was added thereto. After stirring for 1 hour, an aqueous solution in which 3.0 g of acrylic acid and 0.05 g of sodium methallyl sulfonate were dissolved in 3.0 g of distilled water was added dropwise to the reactor for 1 hour again. Thereafter, the same process as in Example 1 was performed to complete the polymerization reaction, and a composition including an acrylamide/ diacetone acrylamide/ acrylic acid/ sodium methallyl sulfonate copolymer was obtained. The composition was dried to obtain the copolymer, and the weight average molecular weight measured by the same method as in Example 1 was 948 kDa.

A subsequent process was performed in the same manner as in Example 1, except that an aqueous solution in which 0.5 g of potassium hydroxide was dissolved in 2.0 g of water was used in a neutralization reaction step. The mole composition ratio of the synthesized acrylamide/ diacetone acrylamide/ potassium acrylate/ acrylic acid/ sodium methallyl sulfonate copolymer was 59.8/15/18.7/6.3/0.2. The measured physical properties are shown in the following Tables 1 and 2.

[Comparative Example 1]

The process was performed in the same manner as in Example 1, except that a mixture of styrene-butadiene rubber (SBR, Sigma Aldrich) and carboxymethyl cellulose sodium salt (CMC, Sigma Aldrich) combined at a weight ratio of 1:1 was used instead of the binder composition in the manufacture of a secondary battery negative electrode. The measured physical properties are shown in the following Tables 1 and 2.

[Comparative Example 2]

The process was performed in the same manner as in Example 1, except that during preparation of the copolymer, 92.5 g of water and 9.5 g of acrylamide were added to a flask and N-isopropyl acrylamide was not added. The mole composition ratio of the synthesized acrylamide/ potassium acrylate/ sodium methallyl sulfonate copolymer was 72.8/27/0.2, and the weight average molecular weight which was measured by the same method as in Example 1 before the neutralization reaction was 845 kDa. The measured physical properties are shown in the following Tables 1 and 2.

[Comparative Example 3]

The process was performed in the same manner as in Example 1, except that the copolymer excluding sodium methallyl sulfonate was prepared. The mole composition ratio of the synthesized acrylamide/ N-isopropyl acrylamide/ potassium acrylate copolymer was 46/27/27, and the weight average molecular weight which was measured by the same method as in Example 1 before the neutralization reaction was 3540 kDa. The measured physical properties are shown in the following Tables 1 and 2.

[Table 1]

| | a | b | c | | d | Degree of neutralization $[M^+]/([H^+]+[M^+])$ | Weight average molecular weight (Mw, kDa) |
|---|---|---|---|---|---|---|---|
| | | | $[M^+]$ | $[H^+]$ | | | |
| Example 1 | 0.458 | 0.27 | 027 | 0 | 0.002 | 1.0 | 890 |
| Example 2 | 0.458 | 0.27 | 027 | 0 | 0.002 | 1.0 | 890 |
| Example 3 | 0.366 | 0.466 | 0.083 | 0.083 | 0.002 | 0.5 | 937 |
| Example 4 | 0.366 | 0.466 | 0.124 | 0.042 | 0.002 | 0.75 | 937 |
| Example 5 | 0.666 | 0.166 | 0.124 | 0.042 | 0.002 | 0.75 | 913 |
| Example 6 | 0.598 | 0.15 | 0.187 | 0.063 | 0.002 | 0.75 | 948 |
| Comparative Example 1 | | | | | | | |
| Comparative Example 2 | 0.728 | - | 027 | 0 | 0.002 | 1.0 | 845 |
| Comparative Example 3 | 0.46 | 0.27 | 027 | 0 | - | 1.0 | 3,540 |

In the above Table 1, a is a mole fraction of acrylamide, b is a mole fraction of alkyl acrylamide (N-isopropyl acrylamide, diethyl acrylamide, or diacetone acrylamide) corresponding to Chemical Formula 2, $[M^+]$ of c is a mole fraction of potassium acrylate or lithium acrylate neutralized with a metal cation, $[H^+]$ of c is a mole fraction of unneutralized acrylic acid, and d is a mole fraction of sodium methallyl sulfonate in the neutralized copolymer. (a+b+c+d=1)

[Table 2]

| | Adhesion (N/20mm) | Charge capacity at cycle 1 (mAh/g) | Discharge capacity at cycle 1 (mAh/g) | Initial efficiency (%) | Expansion rate (%) | Capacity retention rate (%) after 100 cycles of charging and discharging |
|---|---|---|---|---|---|---|
| Example 1 | 3.85 | 477 | 445 | 93.3 | 33 | 98 |
| Example 2 | 3.57 | 474 | 441 | 93.0 | 32 | 98 |
| Example 3 | 3.12 | 474 | 440 | 92.8 | 38 | 97 |
| Example 4 | 3.22 | 473 | 439 | 92.8 | 39 | 97 |
| Example 5 | 3.42 | 474 | 441 | 93.0 | 35 | 97 |
| Example 6 | 3.87 | 474 | 442 | 93.3 | 32 | 98 |
| Comparative Example 1 | 1.77 | 455 | 413 | 90.8 | 56 | 84 |
| Comparative Example 2 | 0.3 | 475 | 407 | 85.7 | 50 | 81 |
| Comparative Example 3 | 0.4 | 475 | 401 | 84.4 | 51 | 78 |

In Table 2, it was confirmed that the binder for a secondary battery according to an exemplary embodiment improved a binding force between a negative electrode current collector and a negative electrode active material by excellent adhesion, and the expansion rate of the negative electrode was significantly low as compared with the comparative examples and a capacity retention rate was effectively improved after 100 cycles of charging and discharging. In addition, Example 1 using the copolymer containing all of the repeating units of Chemical Formula 1 to 4 showed significantly improved expansion rate and capacity retention rate after 100 cycles as compared with the case of using the copolymer of Comparative Example 2 which lacks, in particular, the repeating unit of Chemical Formula 2 of the repeating units of Chemical Formula 1 to 4, and thus, it was confirmed therefrom that the binder for a secondary battery according to an exemplary embodiment and the secondary battery including the same may implement excellent physical properties.

Accordingly, the binder for a secondary battery described above improves a binding force between the negative electrode current collector and the negative electrode active material, thereby obtaining an effect of suppressing exfoliation and desorption of the negative electrode active material, and thus, the expansion of the negative electrode is effectively suppressed to improve the charge/discharge cycle characteristics and the performance of a secondary battery.

The present disclosure may produce a novel binder for a secondary battery including a copolymer containing specific repeating units. When the binder for a secondary battery is applied to a negative electrode and a secondary battery, exfoliation and desorption of a negative electrode and expansion of a negative electrode therefrom may be effectively suppressed, thereby excellently improving the charge/discharge cycle characteristics and the performance of a secondary battery.

Hereinabove, although the present invention has been described by specific matters and limited exemplary embodiments, they have been provided only for assisting in the entire understanding of the present invention, and the present invention is not limited to the exemplary embodiments. Various modifications and changes may be made by those skilled in the art to which the present invention pertains from this description.

Therefore, the spirit of the present invention should not be limited to the above-described exemplary embodiments, and the following claims as well as all modified equally or equivalently to the claims are intended to fall within the scope and spirit of the invention.

## Claims

1. A binder for a secondary battery comprising: a copolymer containing repeating units of the following Chemical Formula 1, Chemical Formula 2, Chemical Formula 3, and Chemical Formula 4:

[Chemical Formula 1]

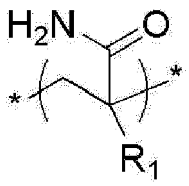

[Chemical Formula 2]

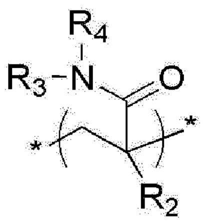

[Chemical Formula 3]

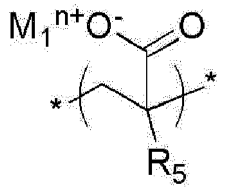

[Chemical Formula 4]

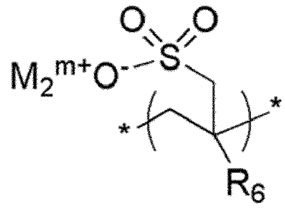

wherein

$R_1$ to $R_6$ are independently of one another hydrogen, or substituted or unsubstituted hydrocarbyl having 1 to 10 carbon atoms, and $R_3$ and $R_4$ are not hydrogen at the same time,
$M_1^{n+}$ is a cation having an oxidation number of n,
$M_2^{m+}$ is a cation having an oxidation number excluding a hydrogen ion of m, and
n and m are independently of each other an integer of 1 to 3.

2. The binder for a secondary battery of claim 1, wherein the copolymer has a mole fraction of the repeating unit of Chemical Formula 1 of 0.2 to 0.8, a mole fraction of the repeating unit of Chemical Formula 2 of 0.1 to 0.7, a mole fraction of the repeating unit of Chemical Formula 3 of 0.05 to 0.5, and a mole fraction of the repeating unit of Chemical Formula 4 of 0.0001 to 0.01.

3. The binder for a secondary battery of any one of the preceding claims, wherein the copolymer has a ratio (b/a) of the mole fraction (b) of the repeating unit of Chemical Formula 2 to the mole fraction (a) of the repeating unit of Chemical Formula 1 of 0.01 to 10.

4. The binder for a secondary battery of any one of the preceding claims, wherein the copolymer has a ratio (c/(a+b)) of the mole fraction (c) of the repeating unit of Chemical Formula 3 to the sum of the mole fraction (a) of the repeating unit of Chemical Formula 1 and the mole fraction (b) of the repeating unit of Chemical Formula 2 of 0.01 to 10.

5. The binder for a secondary battery of any one of the preceding claims, wherein in Chemical Formula 2, the hydrocarbyl of $R_3$ and $R_4$ are independently of each other branched or linear alkyl having 1 to 10 carbon atoms.

6. The binder for a secondary battery of claim 5,

wherein $-CH_2-$ of the alkyl is replaced with one or more selected from -O-, -(C=O)O-, - C(=O)-, and $-N(-R_7)-$, in which $R_7$ is branched or linear alkyl having 1 to 4 carbon atoms.

7. The binder for a secondary battery of any one of the preceding claims, wherein in the repeating unit of Chemical Formula 3, $M_1^{n+}$ is a hydrogen ion or an n-valent metal cation and satisfies the following Equation 1:

$$\text{[Equation 1]}\ 0.1 \leq [M^+]/([H^+]+[M^+]),$$

wherein in the total moles of the repeating unit of Chemical Formula 3 contained in the copolymer, $[H^+]$ is moles of repeating units having a hydrogen ion, and $[M^+]$ is moles of repeating units having metal cations other than the hydrogen ion.

8. The binder for a secondary battery of any one of the preceding claims, wherein the copolymer has a weight average

molecular weight of 500,000 to 2,000,000 Da.

**9.** The binder for a secondary battery of any one of the preceding claims, wherein the binder for a secondary battery is a binder for a negative electrode in a lithium secondary battery.

**10.** A negative electrode slurry composition for a secondary battery comprising: the binder for a secondary battery of any one of the preceding claims; and a negative electrode active material.

**11.** The negative electrode slurry composition for a secondary battery of claim 10, wherein the negative electrode active material includes a silicon-based active material, optionally wherein the negative electrode active material further includes a graphite-based active material.

**12.** The negative electrode slurry composition for a secondary battery of claim 11, wherein the graphite-based active material is further included and a mass ratio between the silicon-based active material and the graphite-based active material is 3 to 97 : 97 to 3.

**13.** A negative electrode for a secondary battery, comprising: a current collector; and a negative electrode active material layer disposed on the current collector,
wherein the negative electrode active material layer comprises the binder of any one of claims 1 to 9.

**14.** The negative electrode of claim 13, wherein the binder is included at 0.5 to 30 wt% with respect to a weight of the negative electrode active material layer.

**15.** A secondary battery comprising the negative electrode of claim 13 or 14.

Europäisches Patentamt
European Patent Office
Office européen des brevets

# EUROPEAN SEARCH REPORT

Application Number
EP 23 20 2521

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 796 434 A1 (ARAKAWA CHEM IND [JP]) 24 March 2021 (2021-03-24) * preparation example 5; paragraph [0124] - paragraph [0129]; claim all * | 1-15 | INV. H01M4/62 H01M4/04 C08F220/06 C08F222/38 H01M4/134 H01M4/1395 H01M4/38 H01M10/0525 |
| X | JP 2018 006333 A (ARAKAWA CHEM IND) 11 January 2018 (2018-01-11) * paragraph [0066]; claim all; example 3 * | 1-15 | |
| X<br>A | EP 3 790 085 A1 (ARAKAWA CHEM IND [JP]) 10 March 2021 (2021-03-10) * preparation example 6 and example 1-6; paragraph [0134] - paragraph [0137]; claim all * | 1,3-5, 7-15<br>2,6 | ADD. H01M4/02 |

TECHNICAL FIELDS SEARCHED (IPC)

H01M
C08F

The present search report has been drawn up for all claims

1

| Place of search | Date of completion of the search | Examiner |
|---|---|---|
| Munich | 31 January 2024 | Götz, Heide |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 23 20 2521

This annex lists the patent family members relating to the patent documents cited in the above-mentioned European search report. The members are as contained in the European Patent Office EDP file on
The European Patent Office is in no way liable for these particulars which are merely given for the purpose of information.

31-01-2024

| Patent document cited in search report | | Publication date | Patent family member(s) | | | Publication date |
|---|---|---|---|---|---|---|
| EP 3796434 | A1 | 24-03-2021 | CN | 112531163 | A | 19-03-2021 |
| | | | EP | 3796434 | A1 | 24-03-2021 |
| | | | JP | 2021051997 | A | 01-04-2021 |
| | | | KR | 20210032912 | A | 25-03-2021 |
| | | | US | 2021083262 | A1 | 18-03-2021 |
| JP 2018006333 | A | 11-01-2018 | JP | 6922456 | B2 | 18-08-2021 |
| | | | JP | 2018006333 | A | 11-01-2018 |
| EP 3790085 | A1 | 10-03-2021 | CN | 112447973 | A | 05-03-2021 |
| | | | EP | 3790085 | A1 | 10-03-2021 |
| | | | JP | 2021044238 | A | 18-03-2021 |
| | | | KR | 20210029103 | A | 15-03-2021 |
| | | | US | 2021075019 | A1 | 11-03-2021 |

EPO FORM P0459

For more details about this annex : see Official Journal of the European Patent Office, No. 12/82